# EUROPEAN PATENT APPLICATION

(11) **EP 3 620 503 A1**
(43) Date of publication of application: **11.03.2020**
(21) Application number: 18793742.0
(22) Date of filing: 20.04.2018
(51) Int. Cl.: C11B 9/02, A23L 2/00, A23L 27/12, C11B 9/00, C12G 3/06

(54) **COLLECTION OF AROMA COMPONENT FROM CITRUS PEEL**

(30) Priority: 01.05.2017 JP 2017091041
(71) Applicant: Suntory Holdings Limited, Osaka-shi, Osaka 530-8203 (JP)
(72) Inventor: NISHIBORI, Tomoyuki, Kawasaki-shi Kanagawa 211-0067 (JP); URAI, Soichiro, Kawasaki-shi Kanagawa 211-0067 (JP); NAGAO, Koji, Kawasaki-shi Kanagawa 211-0067 (JP); HASHIMOTO, Takuya, 08490 (ES)
(74) Representative: Vossius & Partner Patentanwälte Rechtsanwälte mbB
(86) International application number: PCT/JP2018/016248
(87) International publication number: WO 2018/203484

(57) **Abstract**

An object of the present invention is to provide a technique for efficiently recovering an aroma component from the pericarp of a citrus fruit.

According to this invention, an aroma component can be efficiently recovered from a citrus pericarp by enzymatically treating the citrus pericarp to obtain a slurry and further treating the slurry using a countercurrent contact apparatus.

## Description

### TECHNICAL FIELD

The present invention relates to a technique for efficiently recovering an aroma component from the pericarp of a citrus fruit (citrus pericarp). This invention also relates to a beverage or food having added thereto an aroma component recovered from a citrus pericarp, and a method for producing the same.

### BACKGROUND ART

It has heretofore been common to extract a taste or aroma component from a citrus fruit and to add the obtained extract and other additives to a beverage, food or the like. For example, PTL 1 proposes efficient production of a processed pericarp product through enzymatically treating a citrus pericarp with a pectinase to break down the fiber (pectin) in the pericarp. PTL 2 proposes that a fruit juice with enhanced taste is extracted from a fruit and added to a beverage or the like to thereby give a natural taste to the beverage or the like and enhance the aroma of the beverage or the like.

For example, it is known that an aromatic essence composed of an aroma component concentrate is obtained from a citrus fruit juice used as a source material (NPL 1). Further, besides the extraction of an aroma component from a citrus fruit juice using an organic solvent, it is known to extract an aroma component using a countercurrent contact apparatus such as a spinning cone column (SCC) with the aim of suppressing change in flavor caused by heating while efficiently recovering a low-boiling point fraction (PTLs 3 to 5).

### CITATION LIST

### PATENT LITERATURES

PTL 1: Japanese Unexamined Patent Application Publication No. JP 2016-093111
PTL 2: Japanese Unexamined Patent Application Publication No. JP 2016-154520
PTL 3: International Patent Publication No. WO 90/02493
PTL 4: Japanese Examined Patent Application Publication No. JP H07-22646
PTL 5: Japanese Unexamined Patent Application Publication No. JP 2001-152180

### NON PATENT LITERATURE

NPL 1: J. Agric. Food Chem. 1990, 38, 2181

### SUMMARY OF INVENTION

### TECHNICAL PROBLEM

Citrus pericarps are rich in bitterness components such as limonene, flavonoids such as hesperidin, and aroma components such as dietary fiber serving as the source of flavor. However, because of containing lots of relatively hard fiber mainly composed of pectin, citrus pericarps are difficult to utilize and thus have been discarded in many cases.

Also, citrus pericarps contain various types of aroma components including limonene, but essential oils obtained by squeezing citrus pericarps mainly contain lipid-soluble aroma components, and little water-soluble aroma components can be found in such essential oils. Therefore, it is very difficult to reproduce the aroma of a natural citrus fruit with the use of an essential oil alone.

Meanwhile, many citrus aroma components are easily degradable and oxidizable by heat, and thus, concentration of citrus aroma components is often done with the use of a method with less thermal load. However, many aroma components are low in molecular weight, and thus, even when concentration is done using, for example, a micro-concentration membrane (e.g., RO membrane), it is difficult to recover aroma components completely in a retentate fraction, and a certain amount of aroma components penetrate into a permeate fraction.

### SOLUTION TO PROBLEM

The present inventors have made intensive studies to solve the aforementioned problems, and as a result found that an excellent aroma component extract (pericarp aroma) can be obtained from a citrus pericarp through enzymatic treatment of the citrus pericarp with a polysaccharide-degrading enzyme, followed by aroma component extraction using a countercurrent contact apparatus. Thus, the inventors have completed the present invention.

The present invention includes, but is not limited to, the following.
(1) A method for producing an aroma component from a citrus pericarp, the method comprising the steps of: enzymatically treating a citrus pericarp with a polysaccharide-degrading enzyme to obtain a slurry; and recovering an aroma component from the slurry using a countercurrent contact apparatus.
(2) The method as set forth in (1), wherein a water phase comprising the aroma component is recovered using the countercurrent contact apparatus.
(3) The method as set forth in (1), wherein an oil phase comprising the aroma component is recovered using the countercurrent contact apparatus.
(4) The method as set forth in any of (1) to (3), wherein the polysaccharide-degrading enzyme comprises a hemicellulase.
(5) The method as set forth in any of (1) to (4), wherein the citrus pericarp comprises at least one of a lemon pericarp, a grapefruit pericarp, and an orange pericarp.
(6) The method as set forth in any of (1) to (5), wherein the citrus pericarp comprises a lemon pericarp.
(7) The method as set forth in any of (1) to (6), wherein the slurry has a concentration of not less than 55 wt.%.
(8) The method as set forth in any of (1) to (7), wherein a citrus pericarp processed into a size of not more than 5 cm is used as the citrus pericarp.
(9) The method as set forth in any of (1) to (8), wherein a spinning cone column is used as the countercurrent contact apparatus.
(10) A recovered product comprising an aroma component derived from a citrus pericarp, as obtained by the method as set forth in any of (1) to (9).
(11) A water phase comprising an aroma component derived from a citrus pericarp, as recovered by the method as set forth in (2).
(12) The water phase as set forth in (11), wherein the water phase has a weight ratio of 1-hexanol to the total of hexanal and 1-hexanol, of not less than 0.5.
(13) An oil phase comprising an aroma component derived from a citrus pericarp, as recovered by the method as set forth in (3).
(14) A method for producing a beverage or food, the method comprising adding, to a beverage or food, a water phase and/or oil phase comprising an aroma component derived from a citrus pericarp, as recovered by the method as set forth in any of (1) to (9).
(15) A beverage or food having added thereto a water phase and/or oil phase comprising an aroma component derived from a citrus pericarp, as recovered by the method as set forth in any of (1) to (9).
(16) A method for enhancing the aroma of a beverage or food, the method comprising adding, to a beverage or food, a water phase and/or oil phase comprising an aroma component derived from a citrus pericarp, as recovered by the method as set forth in any of (1) to (9).

### ADVANTAGEOUS EFFECTS OF INVENTION

According to the present invention, a pericarp aroma extract can be efficiently obtained from a citrus pericarp used as a source material. Since the pericarp aroma extract of this invention comprises not only lipid-soluble aroma components but also water-soluble aroma components having green or woody aroma characteristics, addition of this aroma extract to a beverage or food gives the beverage or food a unique flavor different from the flavor given by a conventional essential oil. Also, by bringing a slurry into countercurrent contact at a higher gas/slurry ratio, a pericarp aroma extract with high potency can be obtained without concentration.

Further, according to the present invention, since an excellent pericarp aroma extract can be obtained from a citrus pericarp used as a source material, it becomes possible to effectively utilize pericarps as a resource -- this is particularly useful from the viewpoint of waste reduction.

### BRIEF DESCRIPTION OF DRAWINGS

[FIG. 1] FIG. 1 shows a set of photographs showing the appearances of the citrus pericarp slurries obtained in Experiment 1(1) (left panel: non-enzymatically treated slurry, right panel: enzymatically treated slurry).
[FIG. 2] FIG. 2 shows a photograph of the aroma component extract recovered in Experiment 1(2).

### DESCRIPTION OF EMBODIMENTS

### Citrus pericarp

The present invention relates to a technique for recovering an aroma component from the pericarp of a citrus fruit (citrus pericarp) using a countercurrent contact apparatus. In this invention, an aroma component extract is recovered from a citrus pericarp by a method comprising the steps of enzymatically treating a citrus pericarp with a polysaccharide-degrading enzyme, and recovering an aroma component from the enzymatically treated citrus pericarp slurry using a countercurrent contact apparatus.

In the present invention, the pericarp of a citrus fruit is used as a source material. Citrus is a group of plants belonging to the genera *Citrus, Fortunella*, *Poncirus*, etc. in the family *Rutaceae,* Subfamily *Aurantioideae,* tribe *Citreae.* Preferred examples thereof are *Citrus unshiu, Citrus depressa*, *Citrus reticulata* var *poonensis, Citrus reticulata*, *Citrus tankan, Citrus junos, Citrus sudachi,* kumquat (*Fortunella*), *Citrus maxima, Citrus natsudaidai*, *Citrus aurantium*, lime *(Citrus aurantiifolia*), lemon *(Citrus limon*), *Citrus sphaerocarpa*, orange (*Citrus sinensis*), grapefruit (*Citrus* × *paradisi*), and the like, with lemon, orange, and grapefruit being particularly preferred. The citrus pericarp used in this invention can be any of its three distinct layers: epicarp which is the outermost layer, endocarp which is the innermost layer, and mesocarp which is located between the foregoing layers. The citrus pericarp used as a source material can be obtained by removing fruit pulp and seeds from a citrus fruit, but may contain fruit pulp and/or juice. The citrus pericarp used in this invention may be a frozen citrus pericarp.

In the present invention, the citrus pericarp is preferably physically treated as a first step. The method and degree of the physical treatment are not particularly limited. By subjecting the citrus pericarp to physical treatment followed by enzymatic treatment, it becomes possible to allow an enzyme(s) to act on the pericarp more efficiently. The citrus pericarp can be made into the form of dice, chop, pulp, powder or the like by physical treatment such as cutting, fracturing, grinding, or crushing. In a preferred mode, the citrus pericarp can be physically treated using a mill, millstone, or other milling apparatus. The size of the physically treated pericarp is preferably not more than 5 cm. The pericarp is more preferably crushed into a size of not more than 4 cm, still more preferably not more than 3 cm, yet more preferably not more than 1 cm, or may be physically treated into a size of even not more than 5 mm or 3 mm. There is no lower limit on the size of the physically treated pericarp, but the physically treated pericarp preferably has a size of not less than 0.5 mm, more preferably not less than 0.7 mm, still more preferably not less than 1.0 mm. In this invention, from the viewpoints of enhancement of handleability and efficient progress of subsequent enzymatic treatment, it is preferred that the size of the physically treated pericarp fall within the range defined above.

In the present invention, a citrus pericarp is enzymatically treated with a polysaccharide-degrading enzyme, preferably a hemicellulase. Enzymatically treating a citrus pericarp is particularly useful for production purpose, since this treatment makes it easier to elute aroma components present in the pericarp and also causes the breakdown of the citrus pericarp leading to enhancement of the flowability of a pericarp slurry. The amount of the enzyme used is not particularly limited -- this amount is not uniquely determined and varies with various treatment conditions, including the potency of the enzyme used, the type of the citrus pericarp used, and the degree of crushing. However, the enzyme is preferably used in an amount ranging from 0.001 to 6 wt.%, more preferably from 0.01 to 5 wt.%, still more preferably from 0.1 to 4 wt.%, with respect to the weight of the citrus pericarp.

The type of the enzyme used in the present invention is not particularly limited, and any known enzyme can be used as long as it is an enzyme capable of hydrolyzing polysaccharides such as hemicelluloses. Hemicellulases are enzymes capable of degrading hemicelluloses which are a group of polysaccharides, including xylan, arabinoxylan, xyloglucan and glucomannans. Commonly known examples of hemicellulases include xylanase and galactanase.

In the enzymatic treatment of the present invention, an enzyme capable of hydrolyzing polysaccharides is used, but may be used in combination with a plurality of other enzymes -- for example, other enzyme(s) such as xylase, mannanase, cellulase, and/or pectinase may be used in combination with a hemicellulase. The amount of other enzyme(s) combined is not particularly limited, and can be adjusted depending on the type of citrus pericarp used, and/or the like. For example, such other enzyme(s) is(are) used in an amount ranging from 0.001 to 6 wt.%, preferably from 0.01 to 5 wt.%, still more preferably from 0.1 to 4 wt.%, with respect to the weight of citrus pericarp.

In general, enzymatic treatment with a pectinase or the like is, in some cases, done for the purpose of enhancing the flowability of a slurry of source material. However, the present invention does not necessarily require such a pectinase treatment. Also, performing treatment with a polysaccharide-degrading enzyme offers additional advantages such as clarification of a supernatant and an increase in the types of aroma components obtained.

The type of water used in a slurry containing a citrus pericarp during enzymatic treatment is not particularly limited, and any type of water can be used as long as it does not adversely affect flavor. Examples thereof include tap water, ion exchanged water, soft water, hard water, distilled water, pure water, and degassed water obtained by degassing any of the aforementioned types of water. The concentration of an aqueous slurry containing a citrus pericarp is not particularly limited, but is preferably in the range of 20 to 90%, more preferably 30 to 85%, still more preferably 35 to 80%, in consideration of flowability, treatment efficiency, etc.

In the present invention, a citrus pericarp used as a source material may be added in multiple divided doses with the aim of allowing an enzymatic reaction to proceed efficiently. The number of times of addition is not particularly limited, and for example, the pericarp as a source material may be added in 1 to 10 divided doses, in 1 to 5 divided doses, or in 2 to 4 divided doses.

Also, in order to allow an enzymatic reaction to proceed efficiently, it is preferred to perform the enzymatic treatment under stirring. The type of stirrer used is not particularly limited, and for example, a vertical stirrer, a horizontal stirrer, a magnetic stirrer, a shaker, or the like can be used. Further, for the purpose of allowing an enzymatic reaction to proceed efficiently, the temperature of a reaction solution is preferably adjusted to be in the range of 15 to 70°C using a heater. The type of heater used is not particularly limited, and examples thereof include a steam heater, an electrothermal heater, a water jacket heater, and an electromagnetic heater. The treatment time is not particularly limited. For example, the treatment time is preferably in the range of 1 to 24 hours, more preferably 2 to 18 hours, or may also be set to 10 to 16 hours. The lower the reaction solution's temperature is, the longer the treatment time is, whereas the higher the reaction solution's temperature is, the shorter the treatment time is. Thus, the reaction temperature and time can be adjusted as appropriate. For example, when the enzymatic treatment is performed at 40°C, the enzymatic reaction can be terminated at about 2 hours.

In the present invention, in order to terminate an enzymatic treatment, high temperatures can be applied to deactivate an enzyme. For example, the reaction can be controlled by heating a reaction solution to a temperature exceeding 80°C to induce enzyme deactivation. The time for deactivation is not particularly limited, and for example, deactivation treatment can be carried out for 30 seconds to 1 hour, preferably for 1 minute to 30 minutes, more preferably within 10 minutes. The conditions for deactivation vary with the heat resistance of an enzyme. For example, enzyme activity can be deactivated under the following conditions: at 80°C for 30 minutes; at 95°C for 5 minutes; or at 100°C for 1 minute. Enzyme deactivation can be carried out using a plate heater or a countercurrent contact apparatus. It is advantageous to use a countercurrent contact apparatus, because it becomes possible not only to induce enzyme deactivation but also to recover a desired aroma component(s).

In the present invention, after a slurry containing a citrus pericarp is enzymatically treated, an aroma component is recovered from the citrus pericarp slurry using a countercurrent contact apparatus. Distillation using a (gas-liquid) countercurrent contact apparatus is a type of stream distillation. As the countercurrent contact apparatus, a spinning cone column (SCC) or the like can advantageously be used. Recovering an aroma component from a citrus pericarp slurry using a countercurrent contact apparatus offers the following benefits: an aroma component can be distilled at a temperature lower than its boiling point; vaporization of a low-boiling-point component can be promoted; and an aroma component can be prevented from deteriorating due to high temperatures. According to this invention, not only a low-boiling-point aroma component but also a high-boiling-point aroma component present in a citrus pericarp can be efficiently recovered without being affected by deterioration due to temperature.

Recovery of an aroma component using a countercurrent contact apparatus can be carried out by *per se* known methods. The operating conditions for this recovery step can be selected as appropriate depending on the treatment capacity of the apparatus, the type and concentration of a source material, the intensity of aroma, and the like. In a preferred mode, distillation can be carried out at 60 to 120°C, at 80 to 110°C, or at 90°C to 105°C. The stripping efficiency is also not particularly limited, and can be, for example, in the range of 3 to 30%, 5 to 20%, or 8 to 15%. For example, in a countercurrent contact apparatus having a stack of alternate spinning and stationary cones, a liquid or paste slurry is flowed from above down to the top spinning cone while steam is caused to rise up from the bottom, whereby aroma components intrinsically present in a source material can be recovered.

An extract recovered using a countercurrent contact apparatus can be separated into oil and water phases by a commonly used separation method. For example, the recovered extract can be separated by standing still, decantation or centrifugation.

The thus-recovered oil and water phases contain favorable aroma components derived from a citrus pericarp, and are suitable as materials for adding citrus flavor, *i.e.* flavoring agents, when added to a beverage, food, or the like. Examples of beverages and foods to be flavored include: beverages such as coffee, black tea, soft drink, lactobacillus beverage, fruit juice-free beverage, fruit juice-containing beverage, and energy drink; alcoholic beverages such as shochu-based beverage; snacks; nutritional foods; frozen desserts such as ice cream and sherbet; jelly desserts such as jelly, pudding, and adzuki bean jelly; confectionaries such as cookie, cake, chocolate, chewing gum, and steamed bun; bread products such as sweet bread and plain bread; and tablet confectionaries such as lemonade-flavored candy and tablet candy.

The water phase, which is an aroma essence, as recovered according to the present invention is lower in hexanal content but higher in hexanol content than a water phase recovered without an enzymatic treatment. In a preferred mode, the water phase recovered according to this invention has a weight ratio of 1-hexanol to the total weight of hexanal and 1-hexanol, *i.e.* (1-hexanol)/(1-hexanol+hexanal), of not less than 0.5, or not less than 0.8. In contrast, the oil phase recovered according to this invention is lower in limonene content but higher in terpinolene content than an oil phase recovered without an enzymatic treatment.

### Beverage

The aroma component recovered from a citrus pericarp can be added to a beverage or food, and is particularly preferably added to a beverage. There is no particular limitation on which of oil and water phases containing an aroma component is added -- either of oil and water phases may be added to a beverage, or both of them may be added to a beverage. In a preferred mode, the beverage or food having added thereto an aroma component recovered according to the present invention can have a weight ratio of 1-hexanol to the total weight of hexanal and 1-hexanol, of not less than 0.5, or not less than 0.8. The beverage can be an alcoholic beverage containing an alcohol, or a non-alcoholic beverage free of alcohol. It should be noted that the alcohol as referred to in relation to beverages means ethyl alcohol (ethanol), unless otherwise specified.

The "alcoholic beverage" refers to a beverage containing an alcohol, and is produced by mixing an alcohol, as necessary, with water, fruit juice, a flavor, a sugar, a sweetener, an acidulant, and other ingredients. Preferred examples of the alcoholic beverage include, but are not limited to, spirits-based and liqueur-based beverages, such as shochu-based beverage, cocktail, fizz, and wine cooler. The type of an alcohol material is not particularly limited, and examples include brewer's alcohol, spirits (e.g., rum, vodka, gin), liqueur, whiskey, brandy, and shochu (e.g., continuous distilled shochu, single distilled shochu), with further examples being brewed alcoholic beverages such as refined sake, wine, and beer. Such alcohol materials may each be used alone, or two or more thereof may be used in combination. It is preferable to select an alcohol material whose flavor can be effectively utilized. The alcohol concentration in an alcoholic beverage is not particularly limited, but is preferably not more than 30 v/v%, more preferably not more than 20 v/v%, still more preferably not more than 10 v/v%.

The beverage of the present invention may not necessarily contain fruit juice. When fruit juice is added, the amount of fruit juice added is preferably in the range of 0.01 to 30%, or may be not more than 20% or not more than 10%, in terms of straight fruit juice. With regard to the type of fruit juice, the fruit juice can be of any forms, including straight fruit juice used as freshly squeezed from a fruit, or concentrated fruit juice obtained by concentrating straight fruit juice. Also, cloudy fruit juice may be used. Further, use may be made of fruit juice from whole fruit, prepared by crushing the whole fruit including husk and simply removing particularly coarse solid matters like seeds, a fruit puree prepared by sieving a fruit, or fruit juice obtained by crushing or extracting a dried fruit pulp.

The type of fruit juice that can be used in the present invention is not particularly limited, and one or two or more types thereof can be used. Preferred examples of fruit juice include, but are not limited to: juices from citrus fruits (*e*.*g*., lemon (*Citrus limon*), grapefruit (*Citrus* × *paradisi)* (white, ruby), lime (*Citrus aurantiifolia*), orange (*Citrus sinensis*), *Citrus unshiu*, tangors, *Citrus natsudaidai, Citrus natsudaidai* Hayata, *Citrus hassaku, Citrus tamurana*, *Citrus depressa*, *Citrus sudachi, Citrus junos*, *Citrus sphaerocarpa*, *Citrus aurantium*, *Citrus iyo, Citrus reticulata* var *poonensis, Fortunella*, *Citrus sulcata* hort. ex. Ik. Takahashi, oroblanco, *Citrus maxima*); juices from drupes (*e.g*., apricot (*Prunus armeniaca*), cherry (*Prunus avium*), Japanese apricot (*Prunus mume*), Japanese plum (*Prunus salicina*), peach (*Prunus persica*)); and juices from berries (*e.g*., Muscat, Riesling, Delaware, Kyoho, Pione). In the process of production of the beverage or food of this invention containing an aroma component derived from a citrus pericarp, citrus fruit juice is preferably added, and fruit juice from lemon, grapefruit (white, ruby) or the like is particularly preferably added.

The beverage of the present invention may contain a sugar including glucose. In the beverage of this invention, one or two or more types of natural or artificial sweeteners can be used. The type of sweetener used is not particularly limited. Examples of natural sweeteners include, but are not limited to, fructose, glucose, maltose, sucrose, high-fructose syrup, fructose-glucose syrup, glucose-fructose syrup, sugar alcohol, oligosaccharide, honey, sugarcane squeeze (brown sugar syrup), sugar (e.g., saccharose, yellow soft sugar, brown sugar, Wasanbon), maple syrup, molasses, starch syrup, stevia powder, stevia extract, *Momordica grosvenori* powder, *Momordica grosvenori* extract, licorice (*Glycyrrhiza glabra*) powder, licorice extract, *Thaumatococcus daniellii* seed powder, and *Thaumatococcus daniellii* seed extract. Examples of artificial sweeteners include, but are not limited to, sucralose, acesulfame-K, neotame, aspartame, and saccharin. In the beverage of this invention, one or two or more of fructose, glucose, and sucrose are preferably added.

Examples of sugars that can advantageously be used in the present invention include, but are not limited to: monosaccharides such as ribose, xylose, arabinose, glucose, fructose, rhamnose, galactose, and 1,3-dihydroxyacetone; and disaccharides such as sucrose, lactose, and maltose. One of such sugars may be used alone, or a mixture of two or more thereof may be used.

Similarly to common beverages, the beverage of the present invention may have different additives added thereto to the extent that they do not impair the effects of this invention. Examples of different additives include, but are not limited to, acidulant, flavor, vitamin, colorant, antioxidant, emulsifier, preservative, seasoning, essence, pH adjustor, and quality stabilizer.

A thickener may also be used, and examples include, but are not limited to, pectin (e.g., LM or HM pectin), sodium alginate, guar gum, tamarind seed gum, locust bean gum, xanthan gum, carrageenan, gellan gum, celluloses, and pregelatinized starches. Depending on the desired viscosity and the like, a suitable thickener can be selected as appropriate, or different thickeners may be used in combination. The amount of thickener used is not uniquely determined and varies with the type of thickener used and the like, but is typically in the range of 0.01 to 3 mass%, preferably 0.05 to 0.5 mass%.

The beverage of the present invention is advantageously provided as a packaged beverage. As referred to herein, the "packaged beverage" refers to a beverage that is packed in a package such as PET bottle, can, glass bottle or paper package and is drinkable without dilution. The packaged beverage is produced by packing a prepared beverage obtained in a preparation step into a package.

As the package for packing the beverage of the present invention, any of commonly used packages can be used, including metal packages such as aluminum and steel cans, resin packages such as PET bottle, glass bottle, and paper packages. In one mode, a clear package (e.g., PET bottle, glass bottle) may be used to pack the beverage. In one mode of this invention, aseptic packaging at low temperatures may be adopted.

The packaged beverage of the present invention not only can be drunk directly from a package, but also can be consumed for drinking purpose by pouring the beverage packed in a bulk package such as bag-in-box or in a portion package into a different container. Also, a liquid concentrate of the inventive beverage can be diluted when consumed for drinking purpose.

In a preferred mode, the beverage of the present invention is a beverage that can maintain its flavor as perceived immediately after production even when it is stored for a long period of time at ordinary temperatures. For the purpose of long-term storage at ordinary temperatures, the beverage is heat sterilized during production. In a preferred mode of this invention, the beverage is sterilized at high temperatures. As referred to herein, the high-temperature sterilization can be exemplified by a process in which a beverage is sterilized at high temperatures for a short period and then packed in a sterilized storage package under aseptic conditions (UHT sterilization), and by a retort sterilization process in which a prepared beverage is packed in a storage package such as can and then the package is subjected to retort sterilization treatment. The conditions for high-temperature sterilization can be selected, as appropriate, depending on the characteristics of a prepared beverage and the type of storage package used. The conditions for UHT sterilization are generally approximately at 90 to 150°C for 1 to 120 seconds, preferably approximately at 100 to 140°C for 1 to 90 seconds, and the conditions for retort sterilization are generally approximately at 110 to 130°C for 10 to 30 minutes, preferably approximately at 120 to 125°C for 10 to 20 minutes.

In a preferred mode, the packaged beverage of the present invention has a Brix value of 3 to 9. The concentration of soluble solids in solution can be evaluated by means of Brix values determined using a sugar content meter, refractometer, etc. The Brix is a value obtained by converting a refractive index measured at 20°C into a mass/mass percentage of sucrose in solution based on the conversion table published by ICUMSA (the International Commission for Uniform Methods of Sugar Analysis). The Brix is expressed in unit of "°Bx", "%" or "degree".

The beverage of the present invention may also be a low-solute beverage with a low concentration of soluble solids in solution -- thus, the beverage of this invention includes co-called low-calorie beverages labeled as "sugar-free", "saccharide-free", "low-calorie" or the like. The labelings as "sugar-free", "saccharide-free", "low-calorie" or the like are defined in the nutrition labeling standards as stipulated under the health promotion act. For example, the label as "sugar-free" is placed on beverages whose content of a sugar (which is a monosaccharide or disaccharide, and is not a sugar alcohol) is less than 0.5 g per 100 g of beverage. The label as "saccharide-free" is placed on beverages with a saccharide concentration of less than 0.5 g/100 mL. The "saccharide" is a type of carbohydrate which is one of the three major nutrients, and is a generic name for available carbohydrates calculated by subtracting dietary fiber content from total carbohydrates.

The beverage of the present invention is preferably colorless and/or clear. In general, beverages and foods with a colorless, clear appearance like water are likely to be perceived to taste salty, and this tendency is particularly strong in the case of beverages. According to this invention, a beverage that has an excellent flavor balance and maintains a refreshing sensation can be obtained. Further, the beverage of this invention can be perceived as having an excellent taste even when it is drunk directly from a package with a small opening, such as PET bottle.

By stating that "the beverage is clear", it is meant that the beverage has neither a white cloudy color like so-called sports drinks nor turbidity like turbid fruit juice, and is visually clear like water. The degree of clearness of a beverage can be quantified using, for example, a known technique for measuring liquid turbidity. For example, beverages whose absorbance at a wavelength of 660 nm is not more than 0.06 as measured using an ultraviolet visible spectrophotometer (e.g., UV-1600 produced by Shimadzu Corporation) can be regarded as "clear". The beverage of this invention preferably has an absorbance at a wavelength of 660 nm of not more than 0.02, more preferably not more than 0.01.

By stating that "the beverage is colorless", it is meant that the beverage does not have a visually perceivable color. The color of the beverage can be quantified using, for example, a known technique for measuring object's color difference. For example, beverages whose ΔE value of transmitted light is not more than 3.5 as measured with respect to pure water using a colorimetric color difference meter (e.g., ZE 2000 produced by Nippon Denshoku Industries Co., Ltd.) can be regarded as "colorless".

In a preferred mode, the pH of the beverage of the present invention is preferably adjusted to acidic pH, from the viewpoints of long-term storage and protection against microbial contamination. To be specific, the pH of the inventive beverage is preferably adjusted to be in the range of 2 to 5.5, more preferably 3.0 to 5.0, still more preferably 3.3 to 4.7.

The acidity of the beverage of the present invention is preferably adjusted to be in the range of 0.05 to 0.3 g/100 mL, more preferably about 0.06 to 0.25 g/100 mL, still more preferably about 0.07 to 0.2 g/100 mL, in terms of citric acid. By adjusting acidity to lie in such a range, a particularly easy-to-drink beverage with a moderately acidic taste can be obtained. The acidity of the beverage can be measured by a common titration method.

Examples of acidulants include, but are not limited to, different acids such as citric acid, succinic acid, lactic acid, malic acid, tartaric acid, gluconic acid, and phosphoric acid, or salts thereof. The amount of acidulant used is not uniquely determined and varies with the type of acidulant used and the like, but is typically in the range of 0.01 to 5 mass%, preferably 0.05 to 0.5 mass%, with respect to the amount of the beverage.

The beverage of the present invention may be provided as a carbonated beverage containing carbon dioxide gas. Addition of carbon dioxide gas can be performed using a method commonly known to skilled artisans. Examples of such a method include the following, without limitation: carbonic water containing carbon dioxide may be added; carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonic water to produce a carbon dioxide gas-containing beverage.

In one mode, the beverage of the present invention can be made into a carbonated beverage. In this process, the pressure of carbon dioxide gas is preferably adjusted to such a level that a refreshing sensation coming from carbon dioxide gas can be perceived, and more specifically, is preferably in the range of 0.5 to 5.0 kgf/cm², more preferably 1.0 to 4.5 kgf/cm², still more preferably 1.5 to 4.2 kgf/cm².

### Beverage production method

In one aspect, the present invention can be understood to relate to a method for producing a beverage or food. Since the beverage of this invention comprises an aroma component derived from a citrus pericarp, the beverage production method according to this invention involves the step of adding an aroma component recovered from a citrus pericarp. For the purpose of producing a packaged beverage, the method involves at least the steps of preparing a beverage, and packing the prepared beverage in a package.

The beverage of the present invention can be produced using a conventionally known method. Any skilled artisan can design, as appropriate, the conditions for an aroma component addition step, an optional sterilization step, and a packaging step.

In another aspect, the present invention can be understood to relate to a method for enhancing the taste of a beverage through addition of an aroma component derived from a citrus pericarp.

### EXAMPLES

Hereunder, the present invention will be described in more detail by way of specific experimental examples, but this invention is not limited to the experimental examples given below. Unless otherwise stated herein, all concentrations and other like parameters are expressed on a mass basis, and all numerical ranges are inclusive of their endpoints.

### Experiment 1: Recovery of aroma components from a citrus pericarp

### (1) Preparation of citrus pericarp slurries

Pericarps with a thickness of about 3 mm were collected from lemon fruits using a juice extractor (Polycitrus, produce by Fratelli Indelicate). The lemon pericarps were cut into a size of 2 mm using a high-speed grinder (MICRO MEISTER 3M7-40, produced by Masuko Sangyo Co., Ltd.), and then water was added to prepare different concentrations of lemon pericarp slurries. As for sample No. 2, the collected lemon pericarps were frozen and then cut into a size of about 2 mm.

Next, a polysaccharide-degrading enzyme was added to some of the slurries to enzymatically treat them under stirring at 40°C for 2 hours. In this experiment, a hemicellulase (Hemicellulase "Amano" 90, produced by Amano Enzyme Inc.) was added to give a concentration of 1 w/w% per pericarp weight.

In the case of no enzymatic treatment, pericarp slurries were low in flowability, and it is those samples with a slurry concentration of up to about 50% that were suitable for subsequent countercurrent contact treatment using a spinning cone column (SCC) (sample Nos. 1 to 3). On the other hand, in the case where enzymatic treatment was performed, pericarp slurries were high in flowability, and thus, even those samples with a slurry concentration of 70 to 80% had a good flowability suitable for subsequent SCC treatment (sample Nos. 4 and 5).

### (2) SCC treatment of citrus pericarp slurries

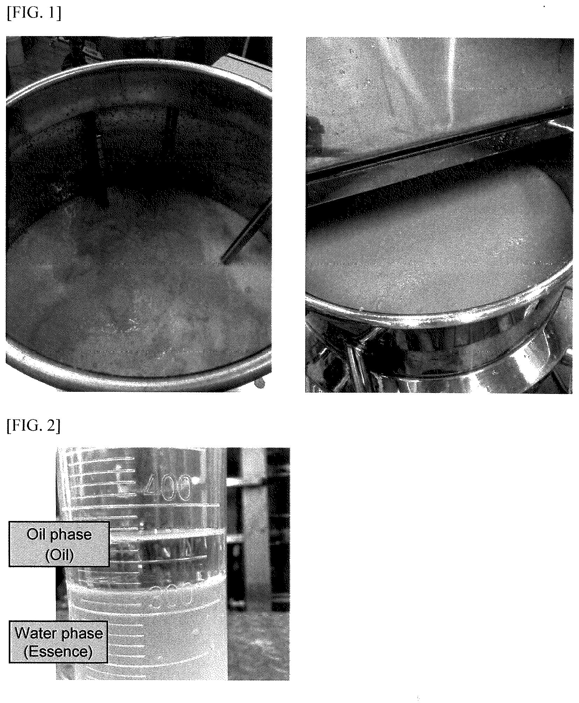

Each of the citrus pericarp slurries prepared in (1) above was passed through a spinning cone column (SCC, produced by Flavourtech) to recover an aroma component extract by countercurrent contact (FIG. 2). The conditions for retention in the SCC were at 100°C for one minute (stripping efficiency: about 10%).

The aroma component extracts recovered from the SCC were measured for the weight percentages of oil and water phases, and the Brix of water phase. The results are shown below.

### [Table 1]

**Table 1. Aroma component recovery from citrus pericarps**

| No. | Material used | Slurry conc. (wt%) | Enzymatic treatment | wt.% of oil phase | wt% of water phase | Brix of water phase |
|---|---|---|---|---|---|---|
| 1 | Citrus pericarp | 40 | No | 3.5% | 96.5% | 0.05 |
| 2 | Citrus pericarp (frozen) | 40 | No | 3.4% | 96.6% | 0.05 |
| 3 | Citrus pericarp | 50 | No | 3.2% | 96.8% | 0.10 |
| 4 | Citrus pericarp | 70 | Yes | 7.0% | 93.0% | 0.34 |
| 5 | Citrus pericarp | 80 | Yes | 9.0% | 91.0% | 0.44 |

In the aroma component extracts recovered by SCC treatment of enzymatically treated citrus pericarp slurries used as source materials, the weight percentage of an oil phase (oil) was two or more times higher than in those extracts recovered from non-enzymatically treated slurries. This is considered to be because enzymatic treatment of pericarps might facilitate recovery of oils typically present in the oil glands of the pericarps.

Further, in the case where enzymatically treated citrus pericarp slurries were used as source materials, the Brix value of a water phase recovered by SCC treatment was significantly high. More specifically, in the case of using non-enzymatically treated pericarp slurries (sample Nos. 1 to 3), the Brix value of a water phase recovered by SCC treatment was in the range of 0.05 to 0.10, whereas in the case of using pericarp slurries undergoing the enzymatic treatment according to the present invention, the Brix value of a water phase recovered by SCC treatment rose considerably (Brix: 0.34 for sample No. 4, 0.44 for sample No. 5).

As evident from the above, according to the present invention, in aroma component extracts that can be recovered from citrus pericarps by SCC treatment, the yield of an oil phase is significantly improved, and also the Brix value (aroma potency) of a water phase is increased, so that reduction of cost and the need for concentration can be achieved.

Additionally, by comparing sample No. 1 with No. 2, it is found that even in the case where citrus pericarps were treated after being frozen, there was not so much variation in the weight percentages of oil and water phases obtained, or in the Brix of a water phase. From this, it is presumed that if frozen citrus pericarps are used to prepare an enzymatically treated pericarp sample, a pericarp aroma extract with comparable aroma profiles will be obtained, like in the case of using non-frozen citrus pericarps. Citrus pericarps can easily alter after squeezing; thus, if citrus pericarps are frozen for storage and, as needed, crushed and enzymatically treated to obtain a slurry, a fresh fruit pericarp aroma extract can be prepared as needed.

### (3) Chemical analysis of aroma components present in recovered water phases

Among the samples recovered in (2) above, the water phases of sample No. 3 (non-enzymatically treated) and sample No. 5 (enzymatically treated) were analyzed for their aroma component profiles by gas chromatography. The results of the analysis are shown below. The water phase recovered by SCC treatment alone contained relatively large amounts of green and woody aroma components such as β-phellandrene and trans-3-hexen-1-ol (trans-3-hexenol). The water phase recovered by SCC treatment of enzymatically treated citrus pericarps was observed to contain increased amounts of aroma components such as prenol, 1-hexanol, and 1-heptanol. This is considered to be because enzymatic treatment of citrus pericarps might result in disruption of cell walls of the pericarps, thereby facilitating recovery of particular aroma components.

Meanwhile, the water phase recovered by SCC treatment of enzymatically treated citrus pericarps exhibited a decrease in the contents of aroma components such as hexanal, β-myrcene, and trans-2-hexenal (aldehyde). This is considered to be because these aroma components might be volatilized during enzymatic treatment at 40°C for 2 hours.

Further, by comparing the water phases of sample No. 3 (non-enzymatically treated) and sample No. 5 (enzymatically treated), it was found that the water phase of sample No. 3 smelled slightly grassy, whereas that of sample No. 5 did not smell so grassy. This fact might be related to decreased content of hexanal (green aroma component) and increased content of hexanol (herbal and spicy aroma component) caused by enzymatic treatment.

### [Table 2]

**Table 2. Aroma components (ppb) present in recovered water phases**

| | Water phase of sample No.3 (non-enzymatically treated) | Water phase of sample No.5 (enzymatically treated) |
|---|---|---|
| Hexanal | 0.92 | 0.00 |
| Trans-2-hexenal | 0.73 | 0.10 |
| *β*-myrcene | 0.98 | 0.00 |
| Prenol | 0.00 | 0.33 |
| 1-Hexanol | 0.00 | 0.18 |
| 1-Heptanol | 0.00 | 0.06 |
| *β*-phellandrene | 9.84 | 9.84 |
| Trans-3-hexen-1-ol | 0.03 | 0.03 |
| Cis-3-hexen-1-ol | 0.00 | 0.00 |

### (4) Chemical analysis of aroma components present in recovered oil phases

Among the samples recovered in (2) above, the oil phases of sample No. 3 (non-enzymatically treated) and sample No. 5 (enzymatically treated) were analyzed for their aroma component profiles by gas chromatography. The results of the analysis are shown below. The oil phases recovered from citrus pericarps were found to contain aroma components characteristic of lemon, such as limonene, citral, and terpinolene.

By comparing the oil phases of sample No. 3 (non-enzymatically treated) and sample No. 5 (enzymatically treated), it was found that the oil phase of sample No. 3 was rich in limonene, whereas that of sample No. 5 was rich in terpinolene. Since limonene generally transforms into terpinolene under acidic conditions, it is considered that the transformation between these components might take place during enzymatic treatment, etc.

### [Table 3]

**Table 3. Aroma components (ppb) present in recovered oil phases**

| | Oil phase of sample No.3 (not enzymatically treated) | Oil phase of sample No.5 (enzymatically treated) |
|---|---|---|
| D-limonene | 260.21 | 0.00 |
| *γ*-terpinene | 8.70 | 0.21 |
| Geranial (trans-citral) | 17.66 | 3.53 |
| Neral (cis-citral) | 10.10 | 7.10 |
| *β*-myrcene | 1.38 | 0.00 |
| Terpinolene | 18.00 | 190.20 |
| Linalool | 2.25 | 0.00 |

### Experiment 2: Beverages having added thereto an aroma component extract recovered from citrus pericarps

### (1) Preparation and evaluation of non-alcoholic beverages

An aroma component extract recovered from citrus pericarps was added to non-alcoholic beverages to evaluate its effects on the aroma of the beverages. To be specific, the water phase and/or the oil phase of sample No. 4 recovered in Experiment 1 was added to 1000 mL of each of the beverages detailed below to prepare packaged beverages. The water phase (Brix: 0.34) was added at a dose of 0.13 mL per 1000 mL of the beverage, and the oil phase was added at a dose of 0.004 mL per 1000 mL of the beverage.
- Mineral water (pH: about 7, "Minami-Alps Tennensui", produced by Suntory Beverage & Food Limited)
- Carbonated water (pH: about 4.1, gas pressure: about 4.1 kgf/cm², "Minami-Alps Tennensui Sparkling", produced by Suntory Beverage & Food Limited)

The prepared soft drinks were subjected to sensory evaluation on flavor at ambient temperature by three trained panelists. To be specific, the beverages were first evaluated for their "orthonasal aroma" alone, and then were put in the mouth to evaluate their "aroma in the mouth (retronasal aroma)". Also, the beverages were evaluated for change of taste as perceived when they were put in the mouth. As a result, the following evaluation results were obtained for the beverages having the inventive aroma component extract added thereto, as compared to those beverages with no aroma component extract added thereto.

### (Beverages having a water phase added thereto)

When the water phase recovered in Experiment 1 was added, both of the soft drinks were perceived as having green aroma and pleasant harshness, and were given a full body taste.

### (Beverages having an oil phase added thereto)

When the oil phase recovered in Experiment 1 was added, both of the soft drinks were given lemon aroma.

### (Beverages having both of water and oil phases added thereto)

When the water and oil phases recovered in Experiment 1 were added, both of the soft drinks were given lemon aroma. As compared to those soft drinks having the oil phase alone added thereto, these soft drinks containing both phases were perceived as having an aroma reminiscent of a whole natural lemon, and also were enhanced in a full body taste.

### (2) Preparation and evaluation of alcoholic beverages

An aroma component extract recovered from citrus pericarps was actually added to alcoholic beverages to evaluate its effects on the aroma of the beverages. To be specific, the water phase and/or the oil phase of sample No. 4 recovered in Experiment 1 was added to 1000 mL of each of the beverages detailed below to prepare packaged beverages. As in Experiment 2(1), the water phase (Brix: 0.34) was added at a dose of 0.13 mL per 1000 mL of the beverage, and the oil phase was added at a dose of 0.004 mL per 1000 mL of the beverage.
- Shochu (fruit juice-free, alcohol content: 20%, pH: about 4.7, "Super Jyuhyo 20", produced by Suntory Spirits Ltd.)
- Shochu-based beverage (fruit juice-free, alcohol content: 9%, pH: about 3.5, gas pressure: about 2.0 kgf/cm², "-196°C Strong Zero DRY", produced by Suntory Spirits Ltd.)

The prepared alcoholic beverages were subjected to sensory evaluation on flavor at ambient temperature by three trained panelists. To be specific, the beverages were first evaluated for their "orthonasal aroma" alone, and then were put in the mouth to evaluate their "aroma in the mouth (retronasal aroma)". Also, the beverages were evaluated for change of taste as perceived when they were put in the mouth. As a result, the following evaluation results were obtained for the beverages having the inventive aroma component extract added thereto, as compared to those beverages with no aroma component extract added thereto.

### (Beverages having a water phase added thereto)

When the water phase recovered in Experiment 1 was added, both of the shochu and the shochu-based beverage were perceived as having green aroma and pleasant harshness, and were given a full body taste.

### (Beverages having an oil phase added thereto)

When the oil phase recovered in Experiment 1 was added, both of the shochu and the shochu-based beverage were given lemon aroma.

### (Beverages having both of water and oil phases added thereto)

When the water and oil phases recovered in Experiment 1 were added, both of the shochu and the shochu-based beverage were given lemon aroma. As compared to those beverages having the oil phase alone added thereto, these beverages containing both phases were perceived as having an aroma reminiscent of a whole natural lemon, and also were enhanced in a full body taste.

## Claims

1. A method for producing an aroma component from a citrus pericarp, the method comprising the steps of: enzymatically treating a citrus pericarp with a polysaccharide-degrading enzyme to obtain a slurry; and recovering an aroma component from the slurry using a countercurrent contact apparatus.

2. The method according to claim 1, wherein a water phase comprising the aroma component is recovered using the countercurrent contact apparatus.

3. The method according to claim 1, wherein an oil phase comprising the aroma component is recovered using the countercurrent contact apparatus.

4. The method according to any of claims 1 to 3, wherein the polysaccharide-degrading enzyme comprises a hemicellulase.

5. The method according to any of claims 1 to 4, wherein the citrus pericarp comprises at least one of a lemon pericarp, a grapefruit pericarp, and an orange pericarp.

6. The method according to any of claims 1 to 5, wherein the citrus pericarp comprises a lemon pericarp.

7. The method according to any of claims 1 to 6, wherein the slurry has a concentration of not less than 55 wt.%.

8. The method according to any of claims 1 to 7, wherein a citrus pericarp processed into a size of not more than 5 cm is used as the citrus pericarp.

9. The method according to any of claims 1 to 8, wherein a spinning cone column is used as the countercurrent contact apparatus.

10. A recovered product comprising an aroma component derived from a citrus pericarp, as obtained by the method according to any of claims 1 to 9.

11. A water phase comprising an aroma component derived from a citrus pericarp, as recovered by the method according to claim 2.

12. The water phase according to claim 11, wherein the water phase has a weight ratio of 1-hexanol to the total of hexanal and 1-hexanol, of not less than 0.5.

13. An oil phase comprising an aroma component derived from a citrus pericarp, as recovered by the method according to claim 3.

14. A method for producing a beverage or food, the method comprising adding, to a beverage or food, a water phase and/or oil phase comprising an aroma component derived from a citrus pericarp, as recovered by the method according to any of claims 1 to 9.

15. A beverage or food having added thereto a water phase and/or oil phase comprising an aroma component derived from a citrus pericarp, as recovered by the method according to any of claims 1 to 9.

16. A method for enhancing the aroma of a beverage or food, the method comprising adding, to a beverage or food, a water phase and/or oil phase comprising an aroma component derived from a citrus pericarp, as recovered by the method according to any of claims 1 to 9.
